# EUROPÄISCHE PATENTSCHRIFT

(11) **EP 0 582 990 B1**
(45) Veröffentlichungstag und Bekanntmachung des Hinweises auf die Patenterteilung: **18.10.1995**
(21) Anmeldenummer: 93112747.6
(22) Anmeldetag: 09.08.1993
(51) Int. Cl.: B60T 13/68, B60T 15/24

(54) **Anhängersteuerventil für Kfz-Bremsanlagen**
Trailer control valve for vehicle brake system
Valve de commande pour remorques pour systèmes de freinage de véhicules

(30) Priorität: 12.08.1992 DE 4226697
(43) Veröffentlichungstag der Anmeldung: 16.02.1994
(73) Patentinhaber: GRAU GMBH, D-69123 Heidelberg (DE)
(72) Erfinder: Sulzyc, Jerzy, D-69214 Eppelheim (DE)
(74) Vertreter: Rehberg, Elmar, Dipl.-Ing.

(56) Entgegenhaltungen:
- EP-A- 0 312 718
- EP-A- 0 353 003
- EP-A- 0 378 810
- DE-A- 3 542 175
- DE-A- 3 928 799

## Beschreibung

Die Erfindung bezieht sich auf ein Anhängersteuerventil für Kfz-Bremsanlagen, mit einem ersten Steuerkolben, der über ein elektrisch betätigbares Magnetventil ansteuerbar ist, und mit einem zweiten Steuerkolben, der pneumatisch ansteuerbar ist, wobei den beiden Steuerkolben ein Doppelventilkörper zugeordnet ist, der Bestandteil eines Einlaßventils und eines Auslaßventils ist. Solche zweikreisig ansteuerbaren Anhängersteuerventile sind bekannt. Sie dienen zum Erzeugen und Aussteuern eines Steuerdrucks in eine Bremsleitung, die zum Anhängefahrzeug führt.

Ein Anhängersteuerventil der eingangs beschriebenen Art ist aus der DE 39 28 799 A1 bekannt. Beide Steuerkolben sind zunächst einmal über je einen Ansteuerkreis pneumatisch ansteuerbar. Der eine Steuerkolben ist zusätzlich zu seiner pneumatischen Ansteuerung über ein elektrisch betätigbares Magnetventil ansteuerbar, um damit den steuerdruck in der dem Steuerkolben zugeordneten Steuerkammer zusätzlich zu variieren. Das Magnetventil ist als Proportionalmagnetventil ausgebildet und wird aufgrund von Auswertsignalen geschaltet, die von einer Elektronik erstellt werden, an welche Sensoren angeschlossen sind, die zwischen Zugwagen und Anhängerfahrzeug angeordnet sind, um die Abbremsung der beiden Fahrzeugteile besser aufeinander abzustimmen. Die beiden Steuerkolben sind gegenläufig auf verschiedenen Seiten des Doppelventilkörpers vorgesehen. Nur der eine Steuerkolben ist mit einem einen Auslaßsitz für den Doppelventilkörper tragenden Fortsatz versehen, während der zusammen mit dem Doppelventilkörper das Einlaßventil bildende Rand Bestandteil eines Kolbens ist, der mit dem zweiten Steuerkolben in Wirkverbindung steht. Der erste Steuerkolben bildet auf seiner der Steuerkammer abgekehrten Rückseite eine Reaktionsfläche, die vom ausgesteuerten Steuerdruck in der Bremsleitung beaufschlagt wird. Der zweite Steuerkolben besitzt auf seiner Rückseite keine Reaktionsfläche, sondern ist hier von der Feststellbremse beaufschlagt, wobei zur Realisierung der Steuerkammer der Feststellbremse eine gehäusefeste Trennwand zwischen dem zweiten Steuerkolben und dem Doppelventilkörper vorgesehen ist. Das bekannte Anhängersteuerventil besitzt keine Voreileinrichtung. Bei Ausfall der elektrischen Ansteuerung über das Magnetventil erfolgt die Bremsung im Anhänger ohne Voreilung.

Die DE-OS 19 58 808 zeigt ein über zwei Kreise pneumatisch ansteuerbares Anhängersteuerventil, bei dem die beiden Steuerkolben ebenfalls gegenläufig auf verschiedenen Seiten des Doppelventilkörpers angeordnet sind. Der Doppelventilkörper ist in einem der beiden Steuerkolben federnd aufgehängt, wobei die Vorratsluft unter den Einlaßsitz dieses Doppelventilkörpers geführt ist. Eine elektrische Ansteuermöglichkeit ist nicht vorgesehen. Auch verfügt das Anhängersteuerventil über keine Anschlußmöglichkeit für eine Feststellbremse. Die Rückseiten der beiden Steuerkolben sind als Reaktionsflächen ausgebildet und werden vom ausgesteuerten Druck in der Bremsleitung beaufschlagt. In einer besonderen Ausführungsform ist der Steuerkolben, der den Doppelventilkörper nicht trägt, mit einer Voreileinrichtung ausgestattet, wobei sich diese Voreilung in der Bremsleitung nur dann auswirkt, wenn die Ansteuerung über diesen einen Steuerkreis erfolgt. Bei einem Defekt dieses Steuerkreises und der Ansteuerung des Anhängersteuerventils durch den anderen Steuerkreis ist dann keine Voreilung vorhanden.

Es sind jedoch auch über zwei Kreise pneumatisch ansteuerbare Anhängersteuerventile der anderen Bauart bekannt, bei der die beiden Steuerkolben gleichläufig benachbart auf der einen Seite des Doppelventilkörpers vorgesehen sind. Die DE 23 23 753 C3 zeigt ein solches Anhängersteuerventil. Nur der eine dem zweiten Steuerkreis zugeordnete Steuerkolben bildet auf seiner Rückseite eine Reaktionsfläche, die über eine Voreileinrichtung beaufschlagbar ist. Auch nur dieser zweite Steuerkolben besitzt einen Fortsatz, der einen Auslaßsitz trägt, der zusammen mit dem Doppelventilkörper das Auslaßventil bildet. Der erste Steuerkolben stützt sich an dem zweiten Steuerkolben direkt ab. Trotzdem wird damit der Vorteil erreicht, daS die Voreileinrichtung in beiden Kreisen wirksam wird; bei Ausfall eines Steuerkreises bleibt daher die Voreilfunktion erhalten. Der Doppelventilkörper bildet mit einem gehäusefesten Rand das Einlaßventil. Er ist darüberhinaus von einem Kolben umgeben, der auf seiner dem Doppelventilkörper abgewandten Vorderseite von der Feststellbremse beaufschlagt ist, während er auf seiner Rückseite eine Vorratskammer für Druckluft einer Druckluftquelle abschließt. Eine Ansteuerung über ein elektrisch betätigbares Magnetventil ist nicht vorgesehen. Der der Feststellbremse zugeordnete Kolben ist über eine zentrale Stange mit dem zweiten Steuerkolben verbunden. Eine Veränderung der Einstellung der Voreileinrichtung, z. B. zum Zwecke der Anpassung der Abstimmung der Abbremsung von Zug- und Anhängerfahrzeug, wirkt sich auch auf die Charakteristik der Feststellbremse aus.

Die DE 35 42 175 A1 zeigt ebenfalls ein pneumatisch über zwei Kreise ansteuerbares Anhängersteuerventil mit den beiden Steuerkolben in gleichläufiger Bauart und benachbarter Anordnung auf einer Seite des Doppelventilkörpers. Auch hier stützt sich der eine Steuerkolben unmittelbar an dem anderen Steuerkolben ab. Der dem Doppelventilkörper zugekehrte Steuerkolben besitzt allein einen Fortsatz, der zusammen mit dem Doppelventilkörper das Auslaßventil bildet. In diesem Steuerkolben ist auch eine Voreileinrichtung untergebracht, über die ein gemeinsamer Reaktionsraum der beiden Steuerkolben beaufschlagbar ist. Die Voreilfunktion wirkt sich auf beide Kreise aus, d. h. auch bei Ausfall eines Kreises bleibt vorteilhaft die Voreilwirkung des Anhängersteuerventils vorhanden. Für die Feststellbremse ist ein gesonderter Kolben vorgesehen, in welchem auch der Doppelventilkörper aufgehängt ist, wobei ein Rand dieses Kolbens mit dem Doppelventilkörper ein bewegliches Einlaßventil bildet. Der Kolben ist von der Feststellbremse auf der dem Doppelventilkörper zugekehrten Seite beaufschlagt, so daß bei einer Betätigung der Feststellbremse der Doppelventilkörper auf dem Auslaßsitz des einen Steuerkolbens anschlägt und der am Kolben der Feststellbremse gebildete Rand sich dann von dem Doppelventilkörper unter Öffnung des Einlaßventils entfernt.

Der Erfindung liegt die Aufgabe zugrunde, ein Anhängersteuerventil der eingangs beschriebenen Art bereitzustellen, welches also zumindest in einem Kreis über ein elektrisch betätigbares Magnetventil ansteuerbar ist und in einem zweiten Kreis insbesondere im Defektfall des ersten Kreises pneumatisch ansteuerbar ist und die beiden Ansteuerkreise ohne gegenseitige Beeinflussung am Anhängersteuerventil wirksam werden.

Erfindungsgemäß wird dies bei dem Anhängersteuerventil der eingangs beschriebenen Art dadurch erreicht, daß die beiden Steuerkolben gleichläufig benachbart auf der einen Seite des Doppelventilkörpers vorgesehen und mit je einem je einen Auslaßsitz für den Doppelventilkörper tragenden Fortsatz versehen sind, daß an beiden Steuerkolben voneinander getrennte Reaktionsflächen vorgesehen sind, und daß nur der pneumatisch ansteuerbare Steuerkolben eine über eine Voreileinrichtung zugeordnete Reaktionsfläche aufweist.

An sich ist die gleichläufige, benachbarte Anordnung der beiden Steuerkolben auf der einen Seite des Doppelventilkörpers im Stand der Technik bekannt. Mit dieser Bauart wird im Stand der Technik der Vorteil genutzt, daß sich die beiden Steuerkolben direkt aufeinander abstützen können und damit nur der eine Steuerkolben einen Fortsatz tragen muß, der Bestandteil des Auslaßventils ist. Auch eröffnet sich bekanntermaßen die vorteilhafte Möglichkeit der Anordnung einer Voreileinrichtung, die in beiden Kreisen wirksam wird. Die bekannte Bauart zielt damit in starkem Maß auf die Herstellung einer gegenseitigen Beeinflussung der beiden Steuerkreise ab und läuft damit der aufgabengemäß angesprochenen Problematik zuwider. Auch die doppelte Anordnung von Auslaßsitzen an jedem der beiden Steuerkolben erscheint bei gleichläufig benachbarter Anordnung der Steuerkolben zunächst widersinnig, eröffnet jedoch zur Lösung der vorliegenden Aufgabe die Möglichkeit, auch in diesem Bereich eine gegenseitige Beeinflussung der beiden Steuerkreise zu vermeiden, um bei Betätigung des einen Steuerkreises gleichsam ein erstes Auslaßventil und bei Betätigung des anderen Steuerkreises ein zweites Auslaßventil zu betätigen, und zwar unabhängig voneinander. Durch die Zwischenschaltung einer gehäusefesten Trennwand zwischen die beiden Steuerkolben oder auch in anderer Weise eröffnet sich die Möglichkeit, an beiden Steuerkolben voneinander getrennte und gegeneinander abgeschlossene Reaktionsflächen und Reaktionsräume zu schaffen, um nur an dem der pneumatischen Ansteuerung zugeordneten Steuerkolben die Voreileinrichtung zur Einwirkung zu bringen, dagegen im elektrisch ansteuerbaren Steuerkreis auf die Wirkung der Voreileinrichtung zu verzichten, um letztlich eine natürlich in diesem Kreis auch erforderliche Voreilung des ausgesteuerten Drucks mit anderen Mitteln zu verwirklichen, insbesondere durch eine im elektrischen Kreis dem Magnetventil und damit dem Anhängersteuerventil vorgeschaltete elektronische Signalverarbeitungseinrichtung. Es wird also über beide Steuerkreise je eine Voreilung erreicht. Die Voreilung über den elektrisch ansteuerbaren Kreis mit dem Magnetventil wird elektrisch erzeugt. Die Voreilung in dem pneumatisch ansteuerbaren Kreis wird in der bisher auch bekannten Weise über ein Druckrückhalteventil, ein Doppelrückschlagventil oder eine ähnliche Einrichtung verwirklicht. Wiederum beeinflussen sich die beiden Voreilungen nicht gegenseitig. Es besteht weiterhin die vorteilhafte Möglichkeit, den in die Anhängerbremsleitung ausgesteuerten steuerdruck des Anhängersteuerventils oder den Ansteuerdruck auf dem ersten Kolben zu messen, also z. B. mit einem Druck/Spannungsumwandler aufzunehmen und der elektronischen Steuereinrichtung zuzuführen, um letztlich eine Variation des in die Bremsleitung ausgesteuerten Drucks herbeizuführen.

Das neue Anhängersteuerventil weist den weiteren Vorteil auf, daß im ordnungsgemäßen Zustand auch der pneumatisch ansteuerbare Steuerkolben, obwohl nicht angesteuert, dennoch bewegt wird, so daß seine Betriebssicherheit für den Defektfall aufrechterhalten wird. Diese Bewegung des nicht angesteuerten Steuerkolbens beeinflußt jedoch die Bewegung des angesteuerten Steuerkolbens in keiner Weise. Insbesondere beeinflussen sich die beiden Voreilungen nicht gegenseitig.

Ein weiterer Vorteil des neuen Anhängersteuerventils liegt darin, daß es nur eine geringe Anzahl bewegter Teile aufweist und die bewegten Massen vergleichsweise gering sind, so daß sich eine große Feinfühligkeit in der Stufung des in die Bremsleitung ausgesteuerten Drucks ergibt.

Besonders vorteilhaft ist es, wenn im Zusammenhang mit den beiden gegenläufig angeordneten Steuerkolben der Doppelventilkörper in einem dritten, der Feststellbremse zugeordneten Steuerkolben aufgehängt ist, der sich durch eine weitere gehäusefeste Trennwand hindurch erstreckt, die dem Doppelventilkörper zugekehrt eine Vorratskammer für Druckluft zum Einlaßventil und dem Doppelventilkörper abgekehrt eine Steuerkammer für den der Feststellbremse zugeordneten Steuerkolben abteilt. Damit ist der mit dem Doppelventilkörper das Einlaßventil bildende Rand nicht mehr gehäusefest angeordnet, sondern auf einem dritten Steuerkolben, der der Feststellbremse zugeordnet ist. Damit wird der Vorteil erreicht, daß sich nicht nur die beiden elektrisch und pneumatisch ansteuerbaren Steuerkolben der Betriebsbremse nicht gegenseitig beeinflussen, sondern die Feststellbremse beeinflußt zugleich keinen der beiden Steuerkreise der Betriebsbremse. Mit anderen Worten wird die Charakteristik der Feststellbremse auch dann nicht verändert, wenn die Voreilungen in den Steuerkreisen der Betriebsbremse zwecks Abstimmung der Abbremsung von Zug- und Anhängerfahrzeug verändert werden.

In einer ersten vorteilhaften Ausführungsform ist der elektrisch ansteuerbare Steuerkolben zwischen der gehäusefesten Trennwand und dem Doppelventilkörper angeordnet und umschließt mit seinem Fortsatz den Fortsatz des pneumatisch ansteuerbaren Steuerkolbens, der die gehäusefeste Trennwand dichtend durchsetzt. Damit kann die Rückseite des elektrisch ansteuerbaren Steuerkolbens, die unmittelbar an die Bremskammer anschließt, ohne jeglichen Aufwand als Reaktionsfläche genutzt werden. Von dieser Bremskammer führt eine Leitung zur Rückseite des pneumatisch ansteuerbaren Kolbens, und zwar mit einem Abzweig direkt zu einer ersten Reaktionsfläche und über die Voreileinrichtung zu einer zweiten Reaktionsfläche.

Der pneumatisch ansteuerbare Steuerkolben kann eine Vertiefung aufweisen, in der ansteuerseitig eine Bewegungsfeder untergebracht ist und die auf der anderen Seite eine Lauffläche für einen ringförmigen Fortsatz an der gehäusefesten Trennwand zur Abteilung von zwei Reaktionsflächen bildet. Damit wird die gehäusefeste Trennwand gleichzeitig zur Unterteilung der beiden an dem pneumatisch ansteuerbaren Steuerkolben erforderlichen Reaktionsflächen genutzt. Die Vertiefung dient aber auch zur Aufnahme der Bewegungsfeder, die vorzugsweise gefesselt an diesem Steuerkolben untergebracht ist und eine gehäuseseitige Abstützung ermöglicht. Damit wird der pneumatisch ansteuerbare Steuerkolben auch dann bewegt, wenn er nicht angesteuert wird, sondern lediglich der elektrisch ansteuerbare Steuerkolben, wie es bei intaktem Anhängersteuerventil und intakter Anlage der Fall ist. Durch diese besondere Anordnung wird eine geringe Bauhöhe erreicht. Dabei ist auch von Vorteil, daß das Druckhalteventil oder das Doppelrückschlagventil der Voreileinrichtung gleichsam radial außerhalb der Steuerkolben angeordnet ist.

In einer weiteren Ausführungsform kann der pneumatisch ansteuerbare Steuerkolben auf der dem Doppelventilkörper zugekehrten Seite der gehäusefesten Trennwand angeordnet sein; dabei ist eine zweite gehäusefeste Trennwand zur Abteilung von zwei Reaktionsflächen an diesem Steuerkolben vorgesehen. Diese Bauart erbringt den Vorteil, daß die Leitungsanschlüsse für die beiden Ansteuerkreise gehäuseseitig leichter untergebracht werden können.

Schließlich ist eine Bauart möglich, bei der der pneumatisch ansteuerbare Steuerkolben in dem elektrisch ansteuerbaren Steuerkolben angeordnet ist. Diese Bauart hat den Vorteil, daß eine gehäusefeste Trennwand in Fortfall kommt, so daß die beiden Steuerkolben eine besonders geringe Bauhöhe ergeben. Die beiden Steuerkolben können auch als leicht austauschbare Einheit im Defektfall schnell ausgewechselt werden.

Dabei trägt der elektrisch ansteuerbare Steuerkolben an seinem Außendurchmesser drei Dichtungen, zwischen denen die Verbindungsleitungen für die Ansteuerung des pneumatisch ansteuerbaren Steuerkolbens und den über die Voreileinrichtung beaufschlagbaren Reaktionsraum vorgesehen sind.

Bei allen Ausführungsformen sind die Fortsätze der beiden Steuerkolben zumindest im Bereich der Auslaßsitze dünnwandig ausgebildet und dichtend aneinander geführt. Dies bedeutet, daß die Fortsätze insbesondere an ihrem freien Ende einander eng umschließen, also nur geringfügig voneinander abweichende Durchmesser aufweisen, damit jeder Fortsatz mit dem Doppelventilkörper zusammenarbeiten und je ein Auslaßventil bilden kann, wobei beide Auslaßventile einem einzigen Einlaßventil zugeordnet sind. Im Bereich dieser Fortsätze ist eine Dichtung angeordnet, deren Reibung überwunden werden muß, wenn bestimmungsgemäß einer der beiden Steuerkolben betätigt wird. Dies ist aber die einzige, zwischen den beiden Steuerkolben wirkende und zu überwindende Kraft.

Die Erfindung wird anhand bevorzugter Ausführungsbeispiele weiter beschrieben und erläutert. Es zeigen:
- Figur 1: einen Vertikalschnitt durch eine erste Ausführungsform des Anhängersteuerventils,
- Figur 2: einen Schnitt durch eine zweite Ausführungsform des Anhängersteuerventils und
- Figur 3: einen Schnitt durch eine dritte Ausführungsform des Anhängersteuerventils.

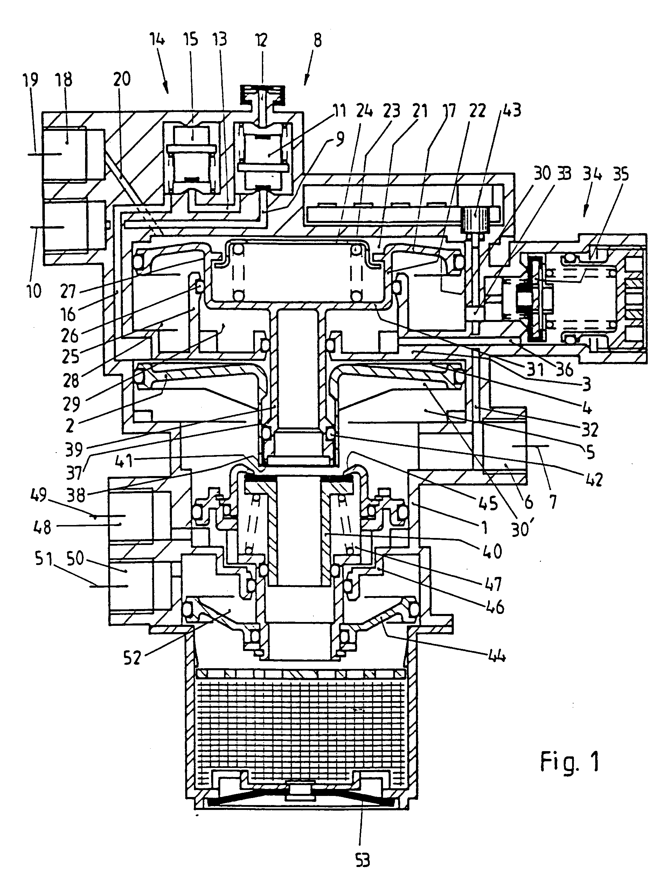

Das in Figur 1 dargestellte Anhängersteuerventil weist in einem Gehäuse 1 einen ersten Steuerkolben 2 auf, der elektrisch ansteuerbar ist und mit einer gehäusefesten Trennwand 3 anströmseitig eine Steuerkammer 4 bildet bzw. abteilt. Auf der anderen Seite des Steuerkolbens ist eine Bremskammer 5 vorgesehen, die über einen Anschluß 6 in dauernder Verbindung zu einer zum Anhänger führenden Bremsleitung 7 steht. Am Gehäuse 1 des Anhängersteuerventils ist in Zuordnung zu dem Steuerkolben 2 ein Magnetventil 8 vorgesehen, an dessen Einlaß über eine Leitung 9 ständig Druckluft aus einer Vorratsleitung 10 ansteht. Der Anker 11 des Magnetventils 8 schließt in der nicht-erregten Stellung, wie dargestellt, ein Durchlaßventil für die Vorratsluft ab und öffnet an seinem anderen Ende einen Entlüftungsanschluß 12 zur Atmosphäre. Von dem Magnetventil 8 führt eine Leitung 13 zu einem zweiten Magnetventil 14 ohne Entlüftungsanschluß. Der Anker 11 des Magnetventils 14 befindet sich in der nicht-erregten, dargestellten Stellung in einer Position, in der ein Absperrventil zwischen Leitungen 13 und 16 geöffnet ist. In der erregten Stellung des Magnetventils 14 wird eine Haltefunktion verwirklicht. Die Leitung 16 führt zur Steuerkammer 4. Damit ist es möglich, durch entsprechende elektrische Signale zu den Magnetventilen 8 und 14 die Steuerkammer 4 des Steuerkolbens 2 entsprechend mit Druckluft aus der Vorratsleitung 10 zu beaufschlagen. Die Magnetventile 8 und 14 werden von einer hier nicht dargestellten elektronischen Signalverarbeitungseinrichtung beaufschlagt bzw. gesteuert, wobei der Anlaß für eine solche Ansteuerung in einem gewünschten Bremsvorgang liegt.

Oberhalb der Trennwand 3 ist im Gehäuse 1 ein zweiter Steuerkolben 17 dichtend und verschieblich gelagert, der pneumatisch ansteuerbar ausgebildet ist. Zu diesem Zweck ist am Gehäuse 1 ein Anschluß 18 für eine pneumatische Signalleitung 19 vorgesehen, die über eine Verbindungsleitung 20 zu einer Steuerkammer 21 oberhalb des Steuerkolbens 17 führt. Der Steuerkolben 17 besitzt in seinem Mittelbereich eine Vertiefung 22, in der eine Bewegungsfeder 23 untergebracht ist, die sich einerseits am Grund der Vertiefung 22 und andererseits auf einem gefesselt geführten Auflager 24 abstützt. Das Auflager 24 ist so bemessen und angeordnet, daß es in der Steuerkammer 21 am Gehäuse anschlägt und andererseits zwischen dem Steuerkolben 17 und der oberen Gehäusewand noch ein Abstand besteht. Die Trennwand 3 weist zugekehrt zu dem zweiten Steuerkolben 17 und abgestimmt auf dessen Vertiefung 22 einen ringförmigen Fortsatz 25 auf, der eine Dichtung 26 trägt, die mit einer Lauffläche 27 an der Vertiefung 22 zusammenarbeitet. Damit wird auf der der Steuerkammer 21 abgekehrten Seite des Steuerkolbens 17 und der gehäusefesten Trennwand ein erster Reaktionsraum 28 und ein zweiter Reaktionsraum 29 abgeteilt. In Zuordnung besitzt somit der Steuerkolben 17 eine erste Reaktionsfläche 30 und eine zweite Reaktionsfläche 31. Der erste Reaktionsraum 28 steht über eine Leitung 32 und eine Verbindungsleitung 33 in dauernder Verbindung zu der Bremskammer 5. Andererseits führt die Verbindungsleitung 33 auch zu einem Druckrückhalteventil 34, welches außen am Gehäuse 1 vorgesehen ist und einen wesentlichen Bestandteil einer ansonsten bekannten Voreileinrichtung bildet. Das Druckrückhalteventil 34 besitzt einen über eine Feder vorgespannten Ventilkörper 35, von dem abströmseitig eine Leitung 36 zu dem zweiten Reaktionsraum 29 und damit zur zweiten Reaktionsfläche 31 führt.

Der erste Steuerkolben 2 besitzt auf seiner der Bremskammer 5 zugekehrten Seite einen hohlen Fortsatz 37, dessen freier Rand 38 einem Doppelventilkörper 40 zugeordnet ist und mit diesem ein Auslaßventil 38, 40 bildet, welches dem Steuerkolben 2 zugeordnet ist. Aber auch der Steuerkolben 17 besitzt einen Fortsatz 39, der durch die Trennwand 3 dichtend hindurchgeführt ist und an einem freien Rand 41 endet, der mit dem Doppelventilkörper 40 ein zweites Auslaßventil 41, 40 bildet, welches dem Steuerkolben 17 zugeordnet ist. In der nicht beaufschlagten Ausgangsstellung liegen sich die beiden freien Ränder 38 und 41 gegenüber, d. h. die Fortsätze 37 und 39 sind gleich lang gegenüber dem Doppelventilkörper 40 ausgebildet, so daß bei einer wahlweisen Betätigung der Steuerkolben 2 oder 17 entweder das eine oder andere Auslaßventil geschlossen wird. Die Fortsätze 37 und 39 sind dünnwandig ausgebildet und so gestaltet, daß die beiden freien Ränder 38 und 41 im Durchmesser nur geringfügig voneinander abweichen. Außerdem ist eine Dichtung 42 vorgesehen, um die Fortsätze 37 und 39 gegeneinander abzudichten.

Die Leitung 32 führt nicht nur zu der Verbindungsleitung 33, sondern auch noch zu einem Druck/Spannungswandler 43, mit dessen Hilfe somit der ausgesteuerte Bremsdruck in der Bremskammer 5 bzw. der Bremsleitung 7 überwacht werden kann. Der Druck/Spannungswandler 43 ist über eine nicht dargestellte elektrische Leitung mit einer zentralen Signalverarbeitungseinrichtung verbunden.

Im unteren Bereich des Gehäuses 1 ist ein dritter Steuerkolben 44, der, wie dargestellt, auch aus mehreren Teilen bestehen kann, gleitend und dichtend gelagert. Der Steuerkolben 44 ist hohl ausgebildet und dient zur federnden Aufhängung des ebenfalls hohl ausgebildeten Doppelventilkörpers 40. Der Steuerkolben 44 weist einen Rand 45 auf, der mit dem Doppelventilkörper 40 ein Einlaßventil 40, 45 bildet. Der Steuerkolben 44 durchsetzt dichtend eine Gehäusewand 46 und bildet in seinem Innern im Anschluß an den Doppelventilkörper 40 eine Vorratskammer 47 für Druckluft. Die Vorratskammer 47 steht über einen Anschluß 48 in dauernder Verbindung zu einer zum Anhängersteuerventil herangeführten Vorratsleitung eines Druckluftbehälters bzw. einer Druckluftbeschaffungseinrichtung. An einem Anschluß 50 ist eine Steuerleitung 51 angeschlossen, die in bekannter Weise Verbindung zu einem Handbremsventil hat. Über dieses Handbremsventil wird der Steuerkreis einer Feststellbremse ausgesteuert und in der Lösestellung, wie dargestellt, Druckluft in einen Raum 52 und damit auf den Steuerkolben 44 geschickt, so daß der Steuerkolben 44 seine unterste Stellung einnimmt, in der das Einlaßventil 40, 45 geschlossen und die beiden Auslaßventile geöffnet sind, so daß die Bremsleitung 7 über die Bremskammer 5 und durch den hohlen Doppelventilkörper 40 und den hohlen Steuerkolben 44 über ein Flatterventil 53 an die Atmosphäre angeschlossen ist.

Die Funktion des Anhängersteuerventil gemäß Figur 1 ist folgende:
Im Gegensatz zu bekannten Anhängersteuerventilen, die zwar auch zweikreisig ansteuerbar sind, erfolgt dort die Ansteuerung im Normalzustand gleichzeitig über beide Ansteuerkreise. Bei dem erfindungsgemäßen Anhängersteuerventil ist die nicht der Fall. Hier ist bei intakter Anlage nur die elektrische Ansteuerung wirksam, d. h. über die Magnetventile 8 und 14 wird für eine Bremsung nur Druck auf den Steuerkolben 2 geschickt, während die Steuerkammer 21 des zweiten Steuerkolbens 17 nicht mit Druckluft beaufschlagt wird. Lediglich im Notfall bzw. Defektfall erfolgt die pneumatische Ansteuerung des Steuerkolbens 17 (allein), um auch in diesem Fall eine Bremsung zu gewährleisten.

Im Normalfall, d. h. bei intakter Anlage, wird durch ein elektrisches Signal das Magnetventil 8 erregt, während das Magnetventil 14 unerregt bleibt. Damit gelangt Druckluft aus der Vorratsleitung 10 als Steuerluft in die Steuerkammer 4 und verschiebt den Steuerkolben 2 nach unten. Der freie Rand 38 des Fortsatzes 37 setzt auf dem Doppelventilkörper 40 auf, so daß das Auslaßventil 38, 40 geschlossen und nachfolgend das Einlaßventil 40, 45 geöffnet wird. Eine bei dieser Normalbetätigung ebenfalls erforderliche Voreilung wird in der elektronischen Signalverarbeitungseinrichtung bereitgestellt. Über das geöffnete Einlaßventil 40, 45 gelangt Druckluft aus der Vorratsleitung 49 in die Bremskammer 5 und damit in die Bremsleitung 7. Der Steuerkolben 2 wird auf seiner Rückseite reaktionsmäßig beaufschlagt. Ist der ausgesteuerte Bremsdruck ausreichend, dann kann beispielsweise über die elektronische Einrichtung das Magnetventil 14 erregt werden, so daß ein weiterer Druckaufbau in der Steuerkammer 4 verhindert wird. Es stellt sich in der Folge eine Abschlußstellung ein. Gleichzeitig mit einer solchen normalen Bremsbetätigung gelangt auch Druckluft aus der Bremskammer 5 über die Leitung 32 und die Verbindungsleitung 33 in den ersten Reaktionsraum 28 und beaufschlagt die Reaktionsfläche 30 des Steuerkolbens 17. Da die Steuerkammer 21 entlüftet ist, wirkt sich dies so aus, daß der Steuerkolben 17 gegen die Kraft der Bewegungsfeder 23 arbeitet, die sich über das Auflager 24 am Gehäuse 1 abstützt. Der Steuerkolben 17 wird damit auch bei einer normalen Betätigung nur des Steuerkolbens 2 mit bewegt, so daß er im Defektfall funktionstüchtig zur Verfügung steht. Ob bei einer solchen Normalbetätigung je nach der Höhe des ausgesteuerten Bremsdrucks das Druckrückhalteventil 34 anspricht oder nicht, ist letztlich ohne Belang. Ggf. wird auch der zweite Reaktionsraum 29 und damit die zweite Reaktionsfläche 31 beaufschlagt, was sich aber auch nur in einer Bewegung des zweiten Steuerkolbens 17 äußert.

Liegt ein Defekt im Bereich des elektrisch ansteuerbaren Steuerkolbens 2 und/oder im Bereich der elektronischen Signalverarbeitungseinrichtung vor, dann wird die Aussteuerung von Signalen zu den Magnetventilen 8 und 14 unterdrückt, so daß die Steuerkammer 4 über den Entlüftungsanschluß 12 des Magnetventils 8 an die Atmosphäre angeschlossen und damit entlüftet bleibt. In diesem Fall wird über die Signalleitung 19 Druckluft in die Steuerkammer 21 geschickt und damit der Steuerkolben 17 anströmseitig beaufschlagt. Der Steuerkolben 17 setzt sich nach unten in Bewegung und sein freier Rand 41 setzt sich unter Schließen des Auslaßventils 40, 41 auf dem Doppelventilkörper 40 auf. In der Folge wird wiederum das Einlaßventil 40, 45 geöffnet und es kann für diesen Notfall eine gleichsam normale Bremsung ausgesteuert werden, wobei jedoch jetzt die Voreileinrichtung 34, 35, 30, 31 wirksam wird. Die Voreileinrichtung muß nicht unbedingt exzentrisch am Gehäuse 1 vorgesehen sein. Sie kann auch in zentrischer Weise im Bereich des Steuerkolbens 17 verwirklicht werden, wie dies im Stand der Technik bekannt ist.

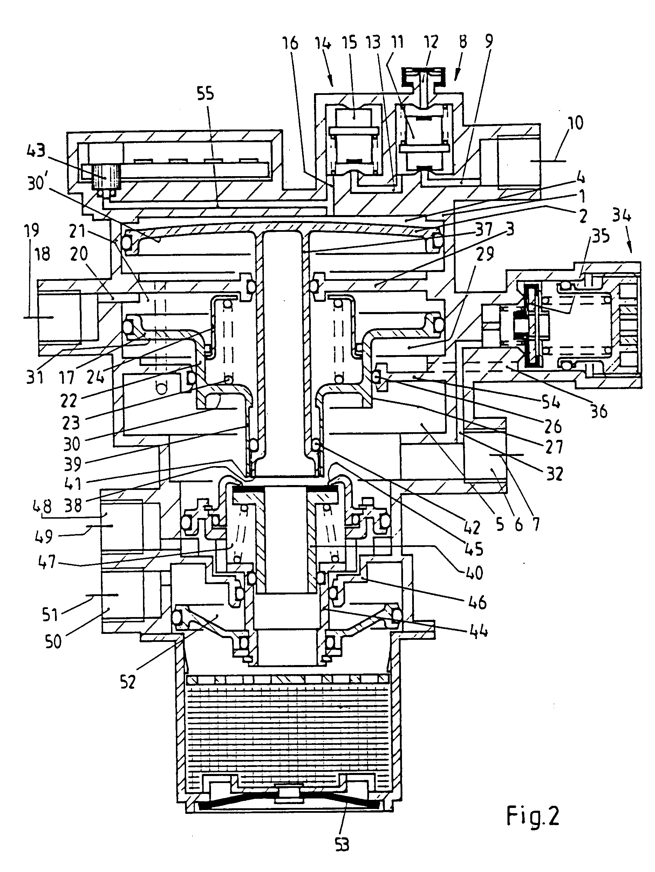

Die Ausführungsform des Anhängersteuerventils gemäß Figur 2 ist in weiten Bereichen ähnlich der Ausführungsform gemäß Figur 1 gestaltet. Lediglich die relative Anordnung der Steuerkolben 2 und 17 ist umgekehrt, d. h. der pneumatisch ansteuerbare Steuerkolben 17 ist hier näher zum Doppelventilkörper 40, also zwischen der Trennwand 3 und dem Doppelventilkörper 40 angeordnet, während der elektrisch ansteuerbare Steuerkolben 2 oberhalb der Trennwand 3 vorgesehen ist. Die Trennwand 3 besitzt hier keinen ringförmigen Fortsatz 25, sondern die Dichtung 26 ist an einer zweiten gehäusefesten Trennwand 54 vorgesehen. Der Fortsatz 39 umschließt hier den Fortsatz 37, so daß die radiale Lage der Auslaßventile zueinander umgekehrt ist. Der Druck/Spannungswandler 43 ist hier über eine Leitung 55 an die Steuerkammer 4 angeschlossen, so daß insoweit der ansteuerseitige Druck überwacht werden kann.

Die Funktion dieses Anhängersteuerventils entspricht ansonsten der des Ausführungsbeispiels der Figur 1.

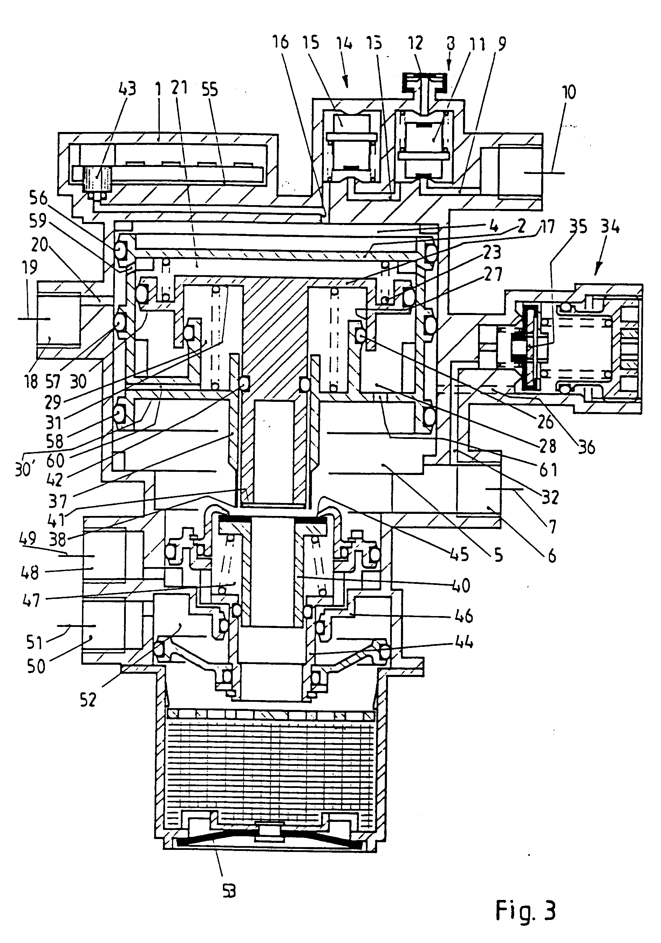

Bei der Ausführungsform gemäß Figur 3 ist auf die Anordnung von gehäusefesten Trennwänden 3 bzw. 54 verzichtet. Die beiden Steuerkolben 2 und 17 sind ineinandergeschachtelt angeordnet und können als Einheit in einem durchgehend zylindrisch ausgenommenen Gehäuse 1 untergebracht sein. Der den Steuerkolben 17 umschließende Steuerkolben 2 besitzt auf seinem äußeren Durchmesser drei Dichtungen 56, 57, 58, wobei die pneumatische Ansteuerung über die Signalleitung 19 zwischen den beiden Dichtungen 56 und 57 und eine Bohrung 59 zu der Steuerkammer 21 führt. Vom Druckrückhalteventil 34 führt die Leitung 36 in einen Ringraum zwischen den Dichtungen 57 und 58. Über einen Kanal 60 besteht Anschluß an den zweiten Reaktionsraum 29 und damit auf die zweite Reaktionsfläche 31. Eine Bohrung 61 in der betreffenden Wand des Steuerkolbens 2 stellt die dauernde Verbindung zwischen dem zweiten Reaktionsraum 28 und der Bremskammer 5 her.

Auch mit diesem Anhängersteuerventil wird die Funktion erreicht, die anhand der Ausführungsbeispiele der Figuren 1 und 2 bereits beschrieben ist.

### Bezugszeichenliste:

- 1: = Gehäuse
- 2: = Steuerkolben
- 3: = Trennwand
- 4: = Steuerkammer
- 5: = Bremskammer
- 6: = Anschluß
- 7: = Bremsleitung
- 8: = Magnetventil
- 9: = Leitung
- 10: = Vorratsleitung
- 11: = Anker
- 12: = Entlüftungsanschluß
- 13: = Leitung
- 14: = Magnetventil
- 15: = Anker
- 16: = Leitung
- 17: = Steuerkolben
- 18: = Anschluß
- 19: = Signalleitung
- 20: = Verbindungsleitung
- 21: = Steuerkammer
- 22: = Vertiefung
- 23: = Bewegungsfeder
- 24: = Auflager
- 25: = Fortsatz
- 26: = Dichtung
- 27: = Lauffläche
- 28: = Reaktionsraum
- 29: = Reaktionsraum
- 30: = Reaktionsfläche
- 30': = Reaktionsfläche
- 31: = Reaktionsfläche
- 32: = Leitung
- 33: = Verbindungsleitung
- 34: = Druckrückhalteventil
- 35: = Ventilkörper
- 36: = Leitung
- 37: = Fortsatz
- 38: = Rand
- 39: = Fortsatz
- 40: = Doppelventilkörper
- 41: = Rand
- 42: = Dichtung
- 43: = Druck/Spannungswandler
- 44: = Steuerkolben
- 45: = Rand
- 46: = Gehäusewand
- 47: = Vorratskammer
- 48: = Anschluß
- 49: = Vorratsleitung
- 50: = Anschluß
- 51: = Leitung
- 52: = Raum
- 53: = Flatterventil
- 54: = Trennwand
- 55: = Leitung
- 56: = Dichtung
- 57: = Dichtung
- 58: = Dichtung
- 59: = Bohrung
- 60: = Kanal
- 61: = Bohrung

## Patentansprüche

1. Anhängersteuerventil für Kfz-Bremsanlagen, mit einem ersten Steuerkolben (2), der über ein elektrisch betätigbares Magnetventil (8) ansteuerbar ist, und mit einem zweiten Steuerkolben (17), der pneumatisch ansteuerbar ist, wobei den beiden Steuerkolben (2, 17) ein Doppelventilkörper (40) zugeordnet ist, der Bestandteil eines Einlaßventils (40, 45) und eines Auslaßventils ist, dadurch gekennzeichnet, daß die beiden Steuerkolben (2, 17) gleichläufig benachbart auf der einen Seite des Doppelventilkörpers (40) vorgesehen und mit je einem je einen Auslaßsitz (38, 40; 41, 40) für den Doppelventilkörper (40) tragenden Fortsatz (37, 39) versehen sind, daß an beiden Steuerkolben (2, 17) voneinander getrennte Reaktionsflächen (30'; 30, 31) vorgesehen sind, und daß nur der pneumatisch ansteuerbare Steuerkolben (17) eine über eine Voreileinrichtung (34, 35, 30, 31) beaufschlagbare zugeordnete Reaktionsfläche (31) aufweist.

2. Anhängersteuerventil nach Anspruch 1, dadurch gekennzeichnet, daß zwischen den beiden Steuerkolben (2, 17) eine gehäusefeste Trennwand (3) vorgesehen ist, die bezüglich des einen Steuerkolbens (17) mehrere Reaktionsräume (28, 29) und bezüglich des anderen Steuerkolbens (2) eine Steuerkammer (4) abteilt.

3. Anhängersteuerventil nach Anspruch 1 oder 2, dadurch gekennzeichnet, daß der Doppelventilkörper (40) in einem dritten, der Feststellbremse zugeordneten Steuerkolben (44) aufgehängt ist, der sich durch eine weitere gehäusefeste Trennwand (46) hindurch erstreckt, die dem Doppelventilkörper (40) zugekehrt eine Vorratskammer (47) für Druckluft zum Einlaßventil (40, 45) und dem Doppelventilkörper (40) abgekehrt eine Steuerkammer (52) für den der Feststellbremse zugeordneten Steuerkolben (44) abteilt.

4. Anhängersteuerventil nach Anspruch 1 und 2, dadurch gekennzeichnet, daß der elektrisch ansteuerbare Steuerkolben (2) zwischen der gehäusefesten Trennwand (3) und dem Doppelventilkörper (40) angeordnet ist und mit seinem Fortsatz (37) den Fortsatz (39) des pneumatisch ansteuerbaren Steuerkolbens (17), der die gehäusefeste Trennwand (3) dichtend durchsetzt, umschließt.

5. Anhängersteuerventil nach Anspruch 4, dadurch gekennzeichnet, daß der pneumatisch ansteuerbare Steuerkolben (17) eine Vertiefung (22) aufweist, in der ansteuerseitig eine Bewegungsfeder (23) untergebracht ist und die auf der anderen Seite eine Lauffläche (27) für einen ringförmigen Fortsatz (25) an der gehäusefesten Trennwand (3) zur Abteilung von zwei Reaktionsflächen (30, 31) bildet.

6. Anhängersteuerventil nach Anspruch 1 und 2, dadurch gekennzeichnet, daS der pneumatisch ansteuerbare Steuerkolben (17) auf der dem Doppelventilkörper (40) zugekehrten Seite der gehäusefesten Trennwand (3) angeordnet ist, und daß eine zweite gehäusefeste Trennwand (54) zur Abteilung von zwei Reaktionsflächen (30, 31) an diesem Steuerkolben vorgesehen ist.

7. Anhängersteuerventil nach Anspruch 1, dadurch gekennzeichnet, daß der pneumatisch ansteuerbare Steuerkolben (17) in dem elektrisch ansteuerbaren Steuerkolben (2) angeordnet ist.

8. Anhängersteuerventil nach Anspruch 7, dadurch gekennzeichnet, daß der elektrisch ansteuerbare Steuerkolben (2) auf seinem Außendurchmesser drei Dichtungen (56, 57, 58) trägt, zwischen denen die Verbindungsleitungen für die Ansteuerung des pneumatisch ansteuerbare Steuerkolbens (17) und den über die Voreileinrichtung (34, 35, 30, 31) beaufschlagbaren Reaktionsraum (29) vorgesehen sind.

9. Anhängersteuerventil nach Anspruch 1, dadurch gekennzeichnet, daß die Fortsätze (37, 39) der beiden Steuerkolben (2, 17) zumindest im Bereich der Auslaßsitze (38, 40; 41, 40) dünnwandig ausgebildet sind und dichtend aneinander geführt sind.

## Claims

1. A trailor control valve for vehicle brake system, comprising a first control piston (2), which can be controlled by an electrically operatable solenoid valve (8), and a second control piston (17), which is pneumatically controllable, whereby a double valve body (40) is allocated to the two control pistons (2, 17), the double valve body being part of an inlet valve (40, 45) and an outlet valve, **wherein** the two control pistons (2, 17) are located on one side of the double valve body (40), adjacent each other and moving in the same direction when operated and are provided with an extension piece (37, 39) each to cooperate with the double valve body (40) and to form an outlet seat (38, 41) each, and reaction surfaces (30'; 30, 31) separated from each other are provided on the two control pistons (2, 17), and only the pneumatically controllable control piston (17) comprises a reaction surface (31), which can be operated via a predominance unit (34, 35, 30, 31).

2. The trailor control valve of claim 1, **wherein** a separating wall (3) connected to the housing (1) is provided between the two control pistons (2, 17) and sepatates reaction chambers (28, 29) at the one control piston (17) and a control chamber (4) at the other control piston (2).

3. The trailor control valve of claim 1 or 2, **wherein** the double valve body (40) is suspended on a third control piston (44) allocated to the hand brake circuit, the third control piston penetrats a further separating wall (46) connected to the housing, and the separating wall in the direction to the double valve body (40) separates a reservoir chamber (47) for compressed air to the inlet valve (40, 45) and in the opposite direction a control chamber (52) for the control piston (44) allocated to the hand brake circuit.

4. The trailor control valve of claim 1 and 2, **wherein** the electrically controllable control piston (2) is located between the separating wall (3) connected to the housing and the double valve body (40) and surrounds with its extension piece (37) the extension piece (39) of the pneumatically controllable control piston (17), which sealingly penetrates the separating wall (3) connected to the housing.

5. The trailor control valve of claim 4, **wherein** the pneumatically controllable control piston (17) has a prolongation (22), in which a motion spring (23) is arranged on the inlet side of the valve and which on the other side forms a running surface (27) for a ring-shaped extension piece (25) connected to the separating wall (3) for the separation of two reaction surfaces (30, 31).

6. The trailor control valve of claims 1 and 2, **wherein** the pneumatically controllable control piston (17) is located on the side of the separating wall (3) facing the double valve body (40), and a second separating wall (54) connected to the housing is provided to separate two reaction surfaces (30, 31) on this control piston.

7. The trailor control valve of claims 1, **wherein** the pneumatically controllable control piston (17) is located in the electrically controllable control piston (2).

8. The trailor control valve of claims 7, **wherein** the electrically controllable control piston (2) carries three seals (56, 57, 58) on its outer diameter, between which the connection lines are provided for the controlling of the pneumatically controllable control piston (17) and the reaction chamber (29), which can be operated via the predominance unit (34, 35, 30, 31).

9. The trailor control valve of claims 1, **wherein** the extension pieces (37, 39) of the two control pistons (2, 17) at least in the region of the outlet seats (38, 41) are designed with small wall thickness and sealingly guided to each other.

## Revendications

1. Soupape de commande de remorque pour systèmes de freinage de véhicules automobiles, avec un premier piston de commande (2), qui peut être commandé par une soupape magnétique (8) à actionnement électrique, et avec un deuxième piston de commande (17), qui peut être commandé pneumatiquement, un double corps de soupape (40), qui fait partie intégrante d'une soupape d'admission (40, 45) et d'une soupage d'échappement, étant associé aux deux pistons de commande (2, 17), caractérisée en ce que les deux pistons de commande (2, 17) sont prévus à proximité l'un de l'autre et déplaçables en synchronisme sur un côté du double corps de soupage (40) et sont pourvus chacun d'un siège d'échappement (38, 40 ; 41, 40) pour le prolongement (37, 39) portant le double corps de soupape (40), en ce que sur les deux pistons de commande (2, 17) sont prévues les surfaces de réaction (30' ; 30, 31) séparées l'une de l'autre et en ce que seul le piston de commande (17) commandable pneumatiquement présente une surface de réaction (31) associée, pouvant être sollicitée par un dispositif d'avance (34, 35, 30, 31).

2. Soupape de commande de remorque selon la revendication 1, caractérisée en ce qu'entre les pistons de commande (2, 17) est prévue une cloison (30) solidaire du boîtier, qui par rapport à un piston de commande (17) sépare plusieurs compartiments de réaction (28, 29) et par rapport à l'autre pistons de commande (2), sépare une chambre de commande (4).

3. Soupape de commande de remorque selon la revendication 1 ou 2 caractérisée en ce que le double corps de soupape (40) est accroché dans un troisième piston de commande (44) associé au frein de blocage, qui s'étend à travers une autre cloison (46) solidaire du boîtier, qui, tournée vers le double corps de soupape (40), sépare une chambre de réserve (47) d'air comprimé vers la soupape d'admission (40, 45) et, tournée à l'opposée du double corps de soupape (40), sépare une chambre de commande (52) pour le piston de commande (44) associe au frein de blocage.

4. Soupape de commande de remorque selon les revendications 1 et 2 caractérisée en ce que le piston de commande (2) commandable électriquement est placé entre la cloison (3) solidaire du boîtier et le double corps de soupape (40) et entoure, avec son prolongement (37), le prolongement (39) du piston de commande (17) commandable pneumatiquement, qui traverse de manière étanche la cloison (3) solidaire du boîtier.

5. Soupape de commande de remorque selon la revendication 4, caractérisée en ce que le piston de commande (17) commandable pneumatiquement présente un creux (22) dans lequel, côté commande, est logé un ressort de déplacement (23) et qui forme, sur l'autre côté, une surface de roulement (27) pour un prolongement (25) annulaire, sur la cloison (3) solidaire du boîtier, afin de séparer deux surfaces de réaction (30, 31).

6. Soupape de commande de remorque selon les revendications 1 et 2, caractérisée en ce que le piston de commande (17) commandable pneumatiquement est placé sur le côté de la cloison (3) solidaire du boîtier, tourné vers le double corps de soupape (40), et en ce qu'une deuxième cloison (54) solidaire du boîtier est prévue pour séparer deux surfaces de réaction (30, 31) sur ce piston de commande.

7. Soupape de commande de remorque selon la revendications 1, caractérisée en ce que le piston de commande (17) commandable pneumatiquement est placé dans le piston de commande (2) commandable électriquement.

8. Soupape de commande de remorque sel on la revendication 7, caractérisée en ce que le piston de commande (2) commandable électriquement porte sur son diamètre extérieur trois joints d'étanchéité (56, 57, 58), entre lesquels sont prévues les lignes de liaison pour la commande du piston de commande (17) commandable pneumatiquement et le compartiment de réaction (29) pouvant être sollicité par le dispositif d'avance (34, 35, 30, 31).

9. Soupape de commande de remorque selon la revendication 1, caractérisée en ce que les prolongements (37, 39) des deux pistons de commande (2, 17) sont à paroi mince au moins dans la zone des sièges d'échappement (38, 40 ; 41, 40) et passent l'un contre l'autre de manière étanche.
